(19) Europäisches Patentamt
European Patent Office
Office européen des brevets

(11) EP 3 202 591 B1

(12) # EUROPEAN PATENT SPECIFICATION

(45) Date of publication and mention of the grant of the patent:
**03.04.2019 Bulletin 2019/14**

(51) Int Cl.:
***B60C 1/00*** *(2006.01)* ***C08L 7/00*** *(2006.01)*
***C08L 15/00*** *(2006.01)*

(21) Application number: **17154665.8**

(22) Date of filing: **03.02.2017**

(54) **TIRE**

REIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.02.2016 JP 2016022030**

(43) Date of publication of application:
**09.08.2017 Bulletin 2017/32**

(73) Proprietor: **Sumitomo Rubber Industries, Ltd.**
**Kobe-shi,**
**Hyogo-ken 651-0072 (JP)**

(72) Inventor: **KUNISAWA, Tetsuya**
**Kobe-shi, Hyogo 651-0072 (JP)**

(74) Representative: **Henkel, Breuer & Partner**
**Patentanwälte**
**Brienner Strasse 1**
**80333 München (DE)**

(56) References cited:
**EP-A1- 1 707 402**
**EP-A1- 2 351 789**
**EP-A1- 3 031 619**
**US-A1- 2009 171 002**
**US-A1- 2010 181 002**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 202 591 B1

## Description

TECHNICAL FIELD

The present invention relates to a tire having a tire component composed of a predetermined rubber composition for tire.

BACKGROUND OF THE INVENTION

In recent years, a demand for energy efficiency of tires has been increasing and more excellent energy efficiency is required for not only a tread which has a large occupied ratio in a tire, but also for components other than a tread such as a sidewall or a clinch.

In JP 2008-101127 A and JP 2009-007454 A, while a rubber composition for tread which succeeds in reducing rolling resistance and improving braking performance and abrasion resistance is disclosed, a rubber composition for tire other than a rubber composition for tread is not disclosed.

SUMMARY OF THE INVENTION

An object of the present invention is to provide a tire having a tire component composed of a rubber composition for tire which is excellent in steering stability and energy efficiency while maintaining strength.

A first invention relates to a tire having a tire component composed of a rubber composition for tire comprising a rubber component and additives, wherein a dynamic elastic modulus E* (MPa) and a loss tangent tanδ measured at a temperature of 70°C, an initial strain of 10% and a dynamic strain of 2% satisfy the following general formulas (1) to (3), and a tensile strength at break TB (MPa) and an elongation at break EB (%) as measured in accordance with JIS K6251 satisfy the following general formulas (4) and (5).

$$\text{General formula (1): } E^*/\tan\delta \geq 33.3$$

$$\text{General formula (2): } 3.0 \leq E^* \leq 8.0$$

$$\text{General formula (3): } \tan\delta \leq 0.090$$

$$\text{General formula (4): } EB \geq 500$$

$$\text{General formula (5): } TB \times EB \geq 9{,}000$$

It is preferable that the rubber composition has a rubber hardness Hs at 23°C as measured in accordance with the JIS-K6253 type A method of not more than 65.

It is preferable that the additives comprise carbon black.

It is preferable that the additives comprise n (n is an integer of 2 or more) kinds of carbon black and a content and nitrogen adsorption specific surface area of the carbon black satisfy the following general formulas (6) and (7):

$$\text{General formula (6): } 10 \leq X1+X2+\ldots+Xn \leq 45$$

$$\text{General formula (7): } 0.2 \leq X1/Y1+X2/Y2+\ldots+Xn/Yn \leq 1.0,$$

wherein each of X1, X2, ...Xn represents a content (part by mass) of each carbon black based on 100 parts by mass of a rubber component and each of Y1, Y2, ...Yn represents a nitrogen adsorption specific surface area ($m^2/g$) of each carbon black.

A second invention relates to a tire having a tire component composed of a rubber composition for tire comprising

a rubber component and additives, wherein a dynamic elastic modulus E* (MPa) and a loss tangent tanδ measured at a temperature of 70°C, an initial strain of 10% and a dynamic strain of 2% satisfy the following general formulas (8) to (10), and a tensile strength at break TB (MPa) and an elongation at break EB (%) as measured in accordance with JIS K6251 satisfy the following general formulas (11) and (12).

$$\text{General formula (8): } E^*/\tan\delta \geq 66.6$$

$$\text{General formula (9): } 6.0 \leq E^* \leq 12.0$$

$$\text{General formula (10): } \tan\delta \leq 0.090$$

$$\text{General formula (11): } EB \geq 300$$

$$\text{General formula (12): } TB \times EB \geq 6{,}000$$

It is preferable that the rubber composition has a rubber hardness Hs at 23°C as measured in accordance with the JIS-K6253 type A method of not more than 75.

It is preferable that the additives comprise carbon black and silica.

It is preferable that the additives comprise m (m is an integer of 1 or more) kinds of carbon black and n (n is an integer of 1 or more) kinds of silica and a content and nitrogen adsorption specific surface area of the carbon black and silica satisfy the following general formulas (13) and (14):

$$\text{General formula (13): } 15 \leq (X1+\ldots+Xm) + (Z1+\ldots+Zn) \leq 70$$

$$\text{General formula (14): } 0.2 \leq (X1/Y1+\ldots+Xm/Ym) + (Z1/W1+\ldots+Zn/Wn) \leq 1.2,$$

wherein each of X1, ...Xm represents a content (part by mass) of each carbon black and each of Zl, ...Zn represents a content (part by mass) of each silica based on 100 parts by mass of a rubber component; and each of Y1, ...Ym represents a nitrogen adsorption specific surface area ($m^2/g$) of each carbon black and each of W1, ...Wn represents a nitrogen adsorption specific surface area ($m^2/g$) of each silica.

According to the present invention, it is possible to provide a tire having a tire component composed of a rubber composition for tire which is excellent in steering stability and energy efficiency while maintaining strength, by using a tire having a tire component composed of a rubber composition for tire comprising a rubber component and additives, wherein a dynamic elastic modulus E* (MPa) and a loss tangent tanδ measured at a temperature of 70°C, an initial strain of 10% and a dynamic strain of 2% satisfy the predetermined formulas, and a tensile strength at break TB (MPa) and an elongation at break EB (%) as measured in accordance with JIS K6251 satisfy predetermined formulas.

DETAILED DESCRIPTION

The tire of the present invention has a tire component composed of a rubber composition for tire comprising a rubber component and additives, wherein a dynamic elastic modulus E* (MPa) and a loss tangent tanδ measured at a temperature of 70°C, an initial strain of 10% and a dynamic strain of 2% satisfy the predetermined formulas, and a tensile strength at break TB (MPa) and an elongation at break EB (%) as measured in accordance with JIS K6251 satisfy predetermined formulas.

The rubber composition for tire according to the first invention is characterized in that a dynamic elastic modulus E* (MPa) and a loss tangent tanδ measured at a temperature of 70°C, an initial strain of 10% and a dynamic strain of 2% satisfy the following formulas (1) to (3).

$$\text{General formula (1): } E^*/\tan\delta \geq 33.3$$

$$\text{General formula (2): } 3.0 \leq E^* \leq 8.0$$

$$\text{General formula (3): } \tan\delta \leq 0.090$$

In particular, a sidewall is subjected to various operating temperatures from 0°C or less to near 100°C depending on an external environment and a running time, but generally, a temperature during running tends to be around 70°C. Therefore, when a dynamic elastic modulus E* (MPa) and a loss tangent tanδ measured at a temperature of 70°C, an initial strain of 10% and a dynamic strain of 2% satisfy the above general formulas (1) to (3), both a rubber physical property of good following property toward the other components of tire and improved energy efficiency can be achieved.

The E* as used herein refers to a dynamic elastic modulus at elongation measured with a viscoelastic spectrometer under a condition of a temperature of 70°C, an initial strain of 10% and a dynamic strain of 2%. Since the dynamic elastic modulus E* exerts a stress against a periodically given deformation, the larger the value of E* is, the better the rubber physical property (rubber elasticity) is, the better the following property toward other components of the tire is and the better the steering stability is. Further, the tanδ as used herein refers to a loss tangent at elongation measured with a viscoelastic spectrometer under a condition of a temperature of 70°C, an initial strain of 10% and a dynamic strain of 2%. The loss tangent tanδ represents a magnitude of energy consumed in a process during which a deformation is applied and this consumed energy converts into heat. That is, the smaller the value of tanδ is, the more excellent the low heat build-up property and energy efficiency are. Therefore, the larger the value of E*/tanδ in the general formula (1) is, the more excellent both the rubber physical property and energy efficiency are.

The E*/tanδ in the formula (1) is not less than 33.3, preferably not less than 38.0. By the E*/tanδ satisfying the general formula (1), both an excellent rubber physical property and energy efficiency can be achieved.

The E* in the general formula (2) is not less than 3.0 MPa, preferably not less than 3.5 MPa. On the other hand, the E* is not more than 8.0 MPa, preferably not more than 7.5 MPa. The rubber physical property of satisfactory and uniform processability can be obtained when the E* is within the above range. Consequently a balance of physical properties between the sidewall and adjacent components becomes good and the sidewall having good following property toward other components of the tire can be obtained, thereby improving steering property of the tire.

The tanδ in the general formula (3) is not more than 0.090, preferably not more than 0.085, more preferably not more than 0.080. The lower limit of the tanδ is not limited particularly. Excellent energy efficiency can be obtained when the tanδ is within the above range.

As described above, the rubber composition for tire according to the first invention can achieve both a rubber physical property of satisfactory following property toward the other components of the tire and excellent energy efficiency, by satisfying the general formulas (1) to (3).

Moreover, the rubber composition for tire according to the first invention is characterized in that an elongation at break EB (%) and a tensile strength at break TB (MPa) as measured in accordance with JIS K6251 satisfy the following general formulas (4) and (5). Thereby, a rubber composition having excellent durability can be obtained.

$$\text{General formula (4): } EB \geq 500$$

$$\text{General formula (5): } TB \times EB \geq 9{,}000$$

The EB as used herein refers to an elongation at break as measured in accordance with JIS K6251. The elongation at break EB represents an elongation ratio (%) when a sample is stretched to be broken and the greater the value of the EB is, the more excellent the fatigue resistance is.

The EB is not less than 500%, which satisfies the general formula (4), and preferably not less than 510%, more preferably not less than 520%. If the EB is less than 500%, fatigue resistance tends not to be obtained sufficiently. The upper limit of the EB is not limited particularly.

The TB as used herein refers to a tensile strength at break as measured in accordance with JIS K6251. The tensile strength at break TB represents a force (MPa) required for stretching and breaking the sample and the greater the value of the TB is, the more excellent the breaking resistance strength is.

The TBxEB is not less than 9,000, which satisfies the general formula (5), and preferably not less than 9,500,

more preferably not less than 10,000. If the TBxEB is less than 9,000, sufficient breaking resistance tends not to be obtained. The upper limit of TB×EB is not limited particularly.

As described above, the rubber composition for tire according to the first invention exhibits excellent durability (fatigue resistance, breaking resistance) by satisfying the general formulas (4) and (5).

The rubber hardness Hs of the rubber composition for tire according to the first invention is preferably not less than 40, more preferably not less than 45, from the viewpoint of processability and steering property. On the other hand, the Hs is preferably not more than 65, more preferably not more than 63, from the viewpoint of flexing crack growth resistance and fatigue resistance. It is noted that the rubber hardness Hs of the rubber composition as used herein is a JIS-A hardness and is a value as measured under an environment of 23°C in accordance with JIS K6253.

The rubber composition for tire according to the first invention comprises a rubber component and additives.

The ones generally used in the tire industry can be used as the rubber component and examples thereof include a diene rubber such as a natural rubber (NR), a modified natural rubber, an isoprene rubber (IR), a butadiene rubber (BR) and a styrene butadiene rubber (SBR). These rubber components may be used alone, or may be used in combination with two or more thereof. NR and BR are preferable since they are excellent in energy efficiency and durability.

NR also includes a high purity natural rubber (HPNR) and examples of the modified natural rubber include an epoxidized natural rubber (ENR), a hydrogenated natural rubber (HNR), a grafted natural rubber and the like. The NR or HPNR which is general in the tire industry such as, for example, SIR20, RSS#3, TSR20 and the like can be used as NR.

Examples of a preparation method of the HPNR include a method of coagulating, washing and drying natural rubber latex which has been subjected to deproteination, saponification, acid treatment and the like.

The nitrogen content of HPNR is preferably not more than 0.20% by mass, more preferably not more than 0.15% by mass from the viewpoint of energy efficiency and durability. It is preferable that the lower limit value of the nitrogen content of HPNR is lower and if possible, it is preferable that HPNR does not contain nitrogen. However, due to limitations of a production method and the like, the lower limit is usually 0.03% by mass. It is noted that the nitrogen content of a natural rubber is measured in accordance with the Kjeldahl method.

When the rubber composition comprises NR as a rubber component, the content thereof in the rubber component is preferably not less than 30% by mass, more preferably not less than 35% by mass. If the content of NR is less than 30% by mass, durability tends to deteriorate. On the other hand, the content of NR is preferably not more than 60% by mass, more preferably not more than 55% by mass. It is noted that if two or more kinds of NR are used together, the total amount is regarded as the content of NR.

The BR is not limited particularly and examples thereof include high-cis BR having a cis content of not less than 90% by mass such as BR730 and BR51 manufactured by JSR Corporation, BR1220 manufactured by ZEON CORPORATION, UBEPOL BR130B, BR150B and BR710 manufactured by Ube Industries, Ltd., and the like; low-cis BR having a cis content of less than 90% by mass such as BR1250H manufactured by ZEON CORPORATION; BR containing a 1,2-syndiotactic polybutadiene crystal (SPB) (SPB-containing BR) such as VCR412 and VCR617 manufactured by Ube Industries, Ltd. and the like. These BRs may be used alone or may be used in combination of two or more thereof. Among these, it is preferable to use low-cis content BR since satisfactory energy efficiency can be obtained.

When the rubber composition comprises BR as a rubber component, the content thereof in the rubber component is preferably not less than 40% by mass, more preferably not less than 45% by mass. If the content of BR is less than 40% by mass, energy efficiency tends to deteriorate. On the other hand, the content of BR is preferably not more than 70% by mass, more preferably not more than 65% by mass. It is noted that if two or more kinds of BR are used together, the total amount is regarded as the content of BR.

Examples of the additives include a reinforcing filler, a coupling agent, a semi-reinforcing filler, a zinc oxide, a stearic acid, various anti-aging agents, a plasticizer, wax, an antistatic agent, a vulcanization agent such as sulfur, various vulcanization accelerators and the like, which are generally used in the tire industry and can be compounded appropriately.

Examples of the reinforcing filler include carbon black, silica and the like and these may be used alone, or may be used in combination with two or more thereof. Among these, it is preferable that the rubber composition comprises carbon black from the viewpoint of weather resistance, prevention of static charge and reinforcing property and it is further preferable that the rubber composition comprises n (n is an integer of 2 or more) kinds of carbon black having different nitrogen adsorption specific surface areas from the viewpoint of achievement of both excellent energy efficiency and durability.

Examples of the carbon black include ones generally used in the tire industry such as GPF, HAF, ISAF, SAF and the like.

The nitrogen adsorption specific surface area ($N_2SA$) of carbon black is preferably not less than 25 $m^2/g$, more preferably not less than 30 $m^2/g$ since a sufficient reinforcing effect can be obtained. On the other hand, the $N_2SA$ of carbon black is preferably not more than 170 $m^2/g$, more preferably not more than 150 $m^2/g$, further preferably not more than 140 $m^2/g$, further preferably not more than 130 $m^2/g$, most preferably not more than 120 $m^2/g$ from the viewpoint of energy efficiency. The $N_2SA$ of carbon black as used herein is a value as measured in accordance with JIS K6217,

method A.

When the rubber composition comprises carbon black, the content thereof based on 100 parts by mass of the rubber component is preferably 20 to 60 parts by mass, more preferably 25 to 50 parts by mass from the viewpoint of achievement of both excellent energy efficiency and durability.

When the rubber composition comprises n (n is an integer of 2 or more) kinds of carbon black, it is preferable that the content and the nitrogen adsorption specific surface area ($N_2SA$) thereof satisfy the following general formulas (6) and (7):

$$\text{General formula (6): } 10 \leq X1+X2+\ldots+Xn \leq 45$$

$$\text{General formula (7): } 0.20 \leq X1/Y1+X2/Y2+\ldots+Xn/Yn \leq 1.0,$$

wherein each of X1, X2, ...Xn represents a content (part by mass) of each carbon black based on 100 parts by mass of a rubber component and each of Y1, Y2, ...Yn represents a nitrogen adsorption specific surface area ($N_2SA$) ($m^2/g$) of each carbon black.

The X1+X2+...+Xn in the general formula (6) represents a total content (part by mass) of each of n kinds of carbon black based on 100 parts by mass of the rubber component. When the rubber composition comprises n kinds of carbon black, the total content of n kinds of carbon black based on 100 parts by mass of the rubber component is preferably not less than 10 parts by mass, more preferably not less than 15 parts by mass, further preferably not less than 20 parts by mass. On the other hand, the total content of n kinds of carbon black is preferably not more than 45 parts by mass. By the total content of n kinds of carbon black being within the above range, that is, by the total content of n kinds of carbon black satisfying the general formula (6), both excellent rubber strength and energy efficiency can be achieved.

The X1/Y1+X2/Y2+...+Xn/Yn in the general formula (7) represents a sum of "content based on 100 parts by mass of the rubber component/$N_2SA$" of each of n kinds of carbon black. When the rubber composition comprises n kinds of carbon black, a value of the sum in the formula (7) is preferably not less than 0.20, more preferably not less than 0.25, further preferably not less than 0.30. On the other hand, the sum in the formula (7) is preferably not more than 1.0, more preferably not more than 0.95. By the sum of "content based on 100 parts by mass of the rubber component/ $N_2SA$" of each carbon black being within the above range, that is, by the sum satisfying the formula (7), energy efficiency and breaking resistance can be improved in a favorable balance.

From the viewpoint of reinforcing property, energy efficiency and the like, it is preferable that the rubber composition comprises silica as a reinforcing filler. Examples of the silica to be used include silica prepared by dry process (silicic anhydride), silica prepared by wet process (hydrous silicic acid) and the like. The silica prepared by wet process is preferable because it has more silanol groups on its surface and has many reaction points with a silane coupling agent.

The BET specific surface area of silica is preferably not less than 50 $m^2/g$, more preferably not less than 60 $m^2/g$, since a sufficient reinforcing effect of silica can be obtained. On the other hand, the BET specific surface area of silica is preferably not more than 350 $m^2/g$, more preferably not more than 340 $m^2/g$, since dispersion of silica is satisfactory and energy efficiency is excellent. It is noted that the BET specific surface area of silica as used herein is a value as measured with the BET method in accordance with ASTM D3037-81.

When the rubber composition comprises silica, the content thereof based on 100 parts by mass of the rubber component is preferably 10 to 40 parts by mass, more preferably 12 to 38 parts by mass from the viewpoint of achievement of both excellent energy efficiency and rubber strength.

Examples of the coupling agent include a silane coupling agent and the like and when the rubber composition comprises silica, it is preferable that a silane coupling agent is used together with silica. Any silane coupling agents conventionally used together with silica can be used, and examples thereof include: sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide,

3-trimethoxysilylpropylbenzothiazolyl tetrasulfide, 3-triethoxysilylpropylbenzothiazole tetrasulfide, 3-triethoxysilylpropyl methacrylate monosulfide and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, 2-mercaptoethyltriethoxysilane, and 3-octanoylthio-1-propyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane, and chloro silane coupling agents such as 3-chloropropyltrimethoxysilane, 3-chloropropyltriethoxysilane, 2-chloroethyltrimethoxysilane, and 2-chloroethyltriethoxysilane. As to product names of these silane coupling agents, examples include Si69, Si266, Si363 (manufactured by Evonik Degussa GmbH) and NXT, NXT-LV, NXTULV, NXT-Z (manufactured by Momentive Performance Materials INC.) and the like. These coupling agents may be used alone, or may be used in combination with two or more thereof.

When the rubber composition comprises a silane coupling agent, the content thereof based on 100 parts by mass of silica is preferably not less than 0.5 part by mass, more preferably not less than 1.5 parts by mass, further preferably not less than 2.5 parts by mass, since the silica can be dispersed well. On the other hand, the content of the silane coupling agent is preferably not more than 20 parts by mass, more preferably not more than 15 parts by mass, further preferably not more than 10 parts by mass, since a dispersing effect of silica that is compatible with an increase of the cost can be obtained and a scorch time does not become too short and processability in a kneading process and an extruding process is satisfactory.

Examples of the semi-reinforcing filler include bituminous coal powder, talc, mica, hard clay, calcium carbonate and the like and these may be used alone, or may be used in combination with two or more thereof. Since these semi-reinforcing fillers do not form polymer gel in a kneading process, satisfactory sheet processability can be obtained by the rubber composition comprising these semi-reinforcing fillers. Among these, from the viewpoint of sheet processability and cost, bituminous coal powder, talc and hard clay are preferable and from the viewpoint of relatively small influence on performance other than the above, calcium carbonate is preferable.

The average particle diameter of talc is preferably not more than 50 μm, more preferably not more than 30μm from the viewpoint of energy efficiency. The lower limit of the average particle diameter of talc is not limited particularly, but preferably is not less than 1 μm.

The average particle diameter of mica is preferably not more than 50 μm, more preferably not more than 30μm from the viewpoint of energy efficiency. The lower limit of the average particle diameter of mica is not limited particularly, but preferably is not less than 1 μm.

The average particle diameter of hard clay is preferably not more than 50 μm, more preferably not more than 30μm from the viewpoint of energy efficiency. The lower limit of the average particle diameter of hard clay is not limited particularly, but preferably is not less than 1 μm.

The average particle diameter of calcium carbonate is preferably not more than 300 nm, more preferably not more than 100 nm from the viewpoint of energy efficiency and degree of influence on other performance. The lower limit of the average particle diameter of calcium carbonate is not limited particularly, but preferably is not less than 30 nm.

It is noted that the average particle diameter of the semi-reinforcing filler as used herein is an average particle diameter on a mass basis as determined from a particle size distribution as measured in accordance with JIS Z 8815-1994.

When the rubber composition comprises the semi-reinforcing filler, the content thereof (if used in combination, the total content) based on 100 parts by mass of the rubber component is preferably not less than 3 parts by mass, more preferably not less than 8 parts by mass from the viewpoint of sheet processability. On the other hand, the content of the semi-reinforcing fillers is preferably not more than 45 parts by mass, more preferably not more than 40 parts by mass since sufficient elongation at break can be obtained.

Oil, a liquid polymer, a liquid resin, plant-derived oil, an ester plasticizer and the like may be used as a plasticizer and among these, oil is preferable from the viewpoint of a favorable balance among processability, energy efficiency and cost. Ones generally used in the tire industry such as aroma oil, naphthene oil, paraffin oil and the like can be used as oil. Examples of the ester plasticizer include dibutyl adipate (DBA), diisobutyl adipate (DIBA), dioctyl adipate (DOA), di(2-ethyl hexyl) azelate (DOZ), dibutyl sebacate (DBS), diisononyl adipate (DINA), dietyl phthalate (DEP), dioctyl phthalate (DOP), diundecyl phthalate (DUP), dibutyl phthalate (DBP), bis(2-ethyl hexyl)sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP) and the like.

When the rubber composition comprises a plasticizer, the content thereof based on 100 parts by mass of the rubber component is preferably not less than 3 parts by mass, more preferably not less than 4 parts by mass from the viewpoint of achievement of both excellent energy efficiency and processability. On the other hand, the content of the plasticizer is preferably not more than 40 parts by mass, more preferably not more than 35 parts by mass, since a decrease of the rubber strength is prevented.

Examples of the antistatic agent include polyethylene glycol ester, a compound having an oxyethylene unit such as polyoxyethylene alkyl ether, ionic liquid and the like and from the viewpoint of an antistatic effect and durability of the rubber composition, ionic liquid is preferable.

Examples of ionic liquid include ones represented by the following chemical formulas (I) to (IV).

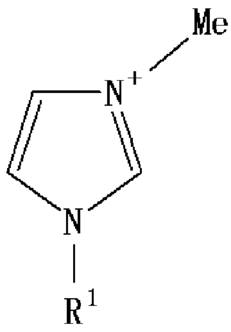

$X^-$ ···(I)

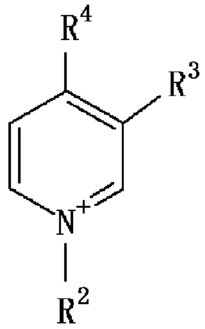

$X^-$ ···(II)

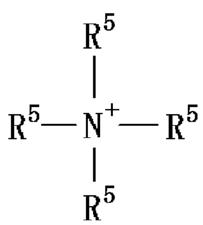

$X^-$ ···(III)

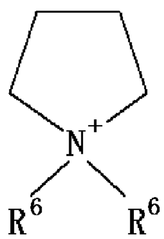

$X^-$ ···(IV)

wherein each of $R^1$, $R^2$, $R^5$ and $R^6$ is independently an alkyl group having 1 to 8 carbon atoms; each of $R^3$ and $R^4$ is independently an alkyl group having 1 to 8 hydrogen or carbon atoms; and X is independently Br, Cl, $NO_3$, $PF_6$, $BF_4$, tosyl, $CF_3SO_3$, $(CF_3SO_2)_2N$, $(C_2F_5SO_2)_2N$, $CH_3O(C_2H_4O)_2SO_3$, $CH_3OSO_3$ or $C_8H_{17}SO_3$.

The ionic liquid represented by the chemical formula (I) is imidazolium-based ionic liquid; the ionic liquid represented by the chemical formula (II) is pyridinium-based ionic liquid; the ionic liquid represented by the chemical formula (III) is ammonium-based ionic liquid; and the ionic liquid represented by the chemical formula (IV) is pyrrolidinium-based ionic liquid.

In the chemical formulas (I) to (IV), each of $R^1$, $R^2$, $R^5$ and $R^6$ is independently an alkyl group having 1 to 8 carbon atoms; each of $R^3$ and $R^4$ is independently an alkyl group having 1 to 8 hydrogen or carbon atoms; and X is independently Br, Cl, $NO_3$, $PF_6$, $BF_4$, tosyl, $CF_3SO_3$, $(CF_3SO_2)_2N$, $(C_2F_5SO_2)_2N$, $CH_3O(C_2H_4O)_2SO_3$, $CH_3OSO_3$ or $C_8H_{17}SO_3$.

Examples of the alkyl group having 1 to 8 carbon atoms include a methyl group, an ethyl group, a propyl group,

a butyl group, a hexyl group, an octyl group and the like.

<Imidazolium-based ionic liquid>

Here, in the ionic liquid represented by the chemical formula (I), the ionic liquid in which the combination of {$R^1$/X} is any of {methyl/$CH_3SO_4$}, {ethyl/Br, Cl, $NO_3$, $PF_6$, $BF_4$, tosyl, $CF_3SO_3$, $(CF_3SO_2)_2N$, $(C_2F_5SO_2)_2N$}, {butyl/Br, Cl, $PF_6$, $BF_4$, $(CF_3SO_2)_2N$, $CH_3O(C_2H_4O)_2SO_3$, $CH_3OSO_3$, $C_8H_{17}SO_3$}, {hexyl/Cl, $PF_6$, $BF_4$} or {octyl/Cl, $BF_4$} is particularly preferable.

<Pyridinium-based ionic liquid>

Also, in the ionic liquid represented by the chemical formula (II), the ionic liquid in which the combination of {$R^2$/$R^3$/$R^4$/X} is any of {ethyl/methyl/H/$(CF_3SO_2)_2N$}, {propyl or butyl/methyl/H/$(CF_3SO_2)_2N$} or {butyl/H/methyl/Br, Cl, $PF_6$ or $BF_4$} is particularly preferable.

<Ammonium-based ionic liquid>

Further, in the ionic liquid represented by the chemical formula (III), the ionic liquid in which three of $R^5$ is a methyl group ($CH_3$), one of $R^5$ is a propyl group ($C_3H_8$) and X is $(CF_3SO_2)_2N$ is particularly preferable.

In the rubber composition for tire according to the first invention, by using at least one of ionic liquids represented by the chemical formulas (I) to (IV) as the antistatic agent, an antistatic effect can be obtained more efficiently. Among the ionic liquids represented by the chemical formulas (I) to (IV), the ionic liquid in which $R^1$ to $R^6$ and X are suitably combined as the above is further excellent in an antistatic effect.

When the rubber composition comprises an antistatic agent, the content thereof based on 100 parts by mass of the rubber component is preferably not less than 5 parts by mass, more preferably not less than 10 parts by mass from the viewpoint of an antistatic effect and processability. On the other hand, the content of the antistatic agent is preferably not more than 35 parts by mass, more preferably not more than 30 parts by mass for preventing deterioration of steering stability due to a decrease of the stiffness of rubber.

Examples of the vulcanization accelerator include benzothiazols, benzothiazolyl sulfenamides, benzothiazolyl sulfenimides and the like. Among these, benzothiazolyl sulfenamides are preferable since they are suitable for NR and BR, fast in vulcanization and relatively reasonable, and N-cyclohexyl-2-benzothiazolyl sulfenamide is more preferable. Also, the benzothiazolyl sulfenamides and other vulcanization accelerators may be used in combination as the vulcanization accelerator.

When the rubber composition comprises a vulcanization accelerator, the content thereof based on 100 parts by mass of the rubber component is preferably not less than 0.5 part by mass, more preferably not less than 1.0 part by mass since a vulcanization speed becomes appropriate and vulcanization can be sufficiently performed. On the other hand, the content of the vulcanization accelerator is preferably not more than 4.0 parts by mass, more preferably not more than 3.0 parts by mass since the vulcanization speed becomes appropriate and scorching is hardly arisen.

The production method of the rubber composition for tire according to the first invention is not limited particularly and can be prepared by a commonly used method. For example, each of the above components are kneaded with a rubber kneading machine such as an open roll, a Bunbury mixer, a sealed kneader and the like, and subsequently the kneaded product is vulcanized, whereby the rubber composition for tire can be prepared.

The rubber composition for tire of the first invention can be used for various components of tire such as a tread, a carcass, a sidewall, a clinch, a bead and the like and among these, it is preferable that the rubber composition is used for sidewall.

The tire of the first invention can be produced by a commonly used method using the rubber composition for tire of the first invention. That is, a predetermined rubber composition is extruded into the shape of a component of tire in unvulcanzied state, formed in a tire building machine with other components of the tire to form an unvulcanized tire. This unvulcanized tire is then heat-pressurized in a vulcanizer to obtain the tire of the first invention.

The rubber composition for tire according to the second invention is characterized in that a dynamic elastic modulus E* (MPa) and a loss tangent tanδ measured at a temperature of 70°C, an initial strain of 10% and a dynamic strain of 2% satisfy the following formulas (8) to (10).

$$\text{General formula (8): } E^*/\tan\delta \geq 66.6$$

$$\text{General formula (9): } 6.0 \leq E^* \leq 12.0$$

$$\text{General formula (10): } \tan\delta \leq 0.090$$

In particular, a clinch is subjected to various operating temperatures from 0°C or less to near 100°C depending on an external environment and a running time, but generally, a temperature during running tends to be around 70°C. Therefore, when a dynamic elastic modulus E* (MPa) and a loss tangent tanδ measured at a temperature of 70°C, an initial strain of 10% and a dynamic strain of 2% satisfy the above general formulas (8) to (10), both a rubber physical property of good following property toward the other components of tire and improved energy efficiency can be achieved.

The E* as used herein refers to a dynamic elastic modulus at elongation measured with a viscoelastic spectrometer under a condition of a temperature of 70°C, an initial strain of 10% and a dynamic strain of 2%. Since the dynamic elastic modulus E* exerts a stress against a periodically given deformation, the larger the value of E* is, the better the rubber physical property (rubber elasticity) is, the better the following property toward other components of the tire is and the better the steering stability is. Further, the tanδ as used herein refers to a loss tangent at elongation measured with a viscoelastic spectrometer under a condition of a temperature of 70°C, an initial strain of 10% and a dynamic strain of 2%. The loss tangent tanδ represents a magnitude of energy consumed in a process during which a deformation is applied and this consumed energy converts into heat. That is, the smaller the value of tanδ is, the more excellent the low heat build-up property and energy efficiency are. Therefore, the larger the value of E*/tanδ in the general formula (8) is, the more excellent both the rubber physical property and energy efficiency are.

The E*/tanδ in the formula (8) is not less than 66.6 and is preferably not less than 80.0. By the E*/tanδ satisfying the general formula (8), both an excellent rubber physical property and energy efficiency can be achieved.

The E* in the general formula (9) is not less than 6.0 MPa, preferably not less than 6.5 MPa. On the other hand, the E* is not more than 12.0 MPa, preferably not more than 11.5 MPa. The rubber physical property of satisfactory and uniform processability can be obtained when the E* is within the above range. Consequently a balance of physical properties between the clinch and adjacent components becomes good and the clinch having good following property toward other components of the tire can be obtained, thereby improving steering property of the tire.

The tanδ in the general formula (10) is not more than 0.090, preferably not more than 0.085, more preferably not more than 0.080. The lower limit of the tanδ is not limited particularly. Excellent energy efficiency can be obtained when the tanδ is within the above range.

As described above, the rubber composition for tire according to the second invention can achieve both a rubber physical property of satisfactory following property toward the other components of the tire and excellent energy efficiency, by satisfying the general formulas (8) to (10).

Moreover, the rubber composition for tire according to the second invention is characterized in that an elongation at break EB (%) and a tensile strength at break TB (MPa) as measured in accordance with JIS K6251 satisfy the following general formulas (11) and (12). Thereby, a rubber composition having excellent durability can be obtained.

$$\text{General formula (11): } EB \geq 300$$

$$\text{General formula (12): } TB \times EB \geq 6{,}000$$

The EB as used herein refers to an elongation at break as measured in accordance with JIS K6251. The elongation at break EB represents an elongation ratio (%) when a sample is stretched to be broken and the greater the value of the EB is, the more excellent the fatigue resistance is.

The EB is not less than 300%, which satisfies the general formula (11), and preferably not less than 310%, more preferably not less than 320%. If the EB is less than 300%, fatigue resistance tends not to be obtained sufficiently. The upper limit of the EB is not limited particularly.

The TB as used herein refers to a tensile strength at break as measured in accordance with JIS K6251. The tensile strength at break TB represents a force (MPa) required for stretching and breaking the sample and the greater the value of the TB is, the more excellent the breaking resistance strength is.

The TB×EB is not less than 6,000, which satisfies the general formula (12), and preferably not less than 6,250, more preferably not less than 6,500. If the TB×EB is less than 6,000, sufficient breaking resistance tends not to be obtained. The upper limit of TB×EB is not limited particularly.

As described above, the rubber composition for tire according to the second invention exhibits excellent durability

(fatigue resistance, breaking resistance) by satisfying the general formulas (11) and (12).

The rubber hardness Hs of the rubber composition for tire according to the second invention is preferably not less than 50, more preferably not less than 55, from the viewpoint of processability and steering property. On the other hand, the Hs is preferably not more than 75, more preferably not more than 73, from the viewpoint of flexing crack growth resistance and fatigue resistance. It is noted that the rubber hardness Hs of the rubber composition as used herein is a JIS-A hardness and is a value as measured under an environment of 23°C in accordance with JIS K6253.

The rubber composition for tire according to the second invention comprises a rubber component and additives.

The ones generally used in the tire industry can be used as the rubber component and examples thereof include a diene rubber such as a natural rubber (NR), a modified natural rubber, an isoprene rubber (IR), a butadiene rubber (BR) and a styrene butadiene rubber (SBR). These rubber components may be used alone, or may be used in combination with two or more thereof. NR and BR are preferable since they are excellent in energy efficiency and durability.

NR also includes a high purity natural rubber (HPNR) and examples of the modified natural rubber include an epoxidized natural rubber (ENR), a hydrogenated natural rubber (HNR), a grafted natural rubber and the like. The NR or HPNR which is general in the tire industry such as, for example, SIR20, RSS#3, TSR20 and the like can be used as NR.

Examples of a preparation method of the HPNR include a method of coagulating, washing and drying natural rubber latex which has been subjected to deproteination, saponification, acid treatment and the like.

The nitrogen content of HPNR is preferably not more than 0.20% by mass, more preferably not more than 0.15% by mass from the viewpoint of energy efficiency and durability. It is preferable that the lower limit value of the nitrogen content of HPNR is lower and if possible, it is preferable that HPNR does not contain nitrogen. However, due to limitations of a production method and the like, the lower limit is usually 0.03% by mass. It is noted that the nitrogen content of a natural rubber is measured in accordance with the Kjeldahl method.

When the rubber composition comprises NR as a rubber component, the content thereof in the rubber component is preferably not less than 15% by mass, more preferably not less than 20% by mass. If the content of NR is less than 15% by mass, durability tends to deteriorate. On the other hand, the content of NR is preferably not more than 55% by mass, more preferably not more than 50% by mass. It is noted that if two or more kinds of NR are used together, the total amount is regarded as the content of NR.

The BR is not limited particularly and examples thereof include high-cis BR having a cis content of not less than 90% by mass such as BR730 and BR51 manufactured by JSR Corporation, BR1220 manufactured by ZEON CORPORATION, UBEPOL BR130B, BR150B and BR710 manufactured by Ube Industries, Ltd., and the like; low-cis BR having a cis content of less than 90% by mass such as BR1250H manufactured by ZEON CORPORATION; BR containing a 1,2-syndiotactic polybutadiene crystal (SPB) (SPB-containing BR) such as VCR412 and VCR617 manufactured by Ube Industries, Ltd. and the like. These BRs may be used alone or may be used in combination of two or more thereof. Among these, it is preferable to use low-cis content BR since satisfactory energy efficiency can be obtained.

When the rubber composition comprises BR as a rubber component, the content thereof in the rubber component is preferably not less than 45% by mass, more preferably not less than 50% by mass. If the content of BR is less than 45% by mass, energy efficiency tends to deteriorate. On the other hand, the content of BR is preferably not more than 85% by mass, more preferably not more than 80% by mass. It is noted that if two or more kinds of BR are used together, the total amount is regarded as the content of BR.

Examples of the additives include a reinforcing filler, a coupling agent, a semi-reinforcing filler, a zinc oxide, a stearic acid, various anti-aging agents, a plasticizer, wax, an antistatic agent, a vulcanization agent such as sulfur, various vulcanization accelerators and the like, which are generally used in the tire industry and can be compounded appropriately.

Examples of the reinforcing filler include carbon black, silica and the like. Among these, it is preferable that the rubber composition comprises carbon black from the viewpoint of weather resistance, prevention of static charge and reinforcing property and it is preferable that the rubber composition comprises silica from the viewpoint of energy efficiency and reinforcing property. Further, it is preferable that the rubber composition comprises carbon black and silica from the viewpoint of achievement of both excellent rubber strength and energy efficiency.

Examples of the carbon black include ones generally used in the tire industry such as GPF, HAF, ISAF, SAF and the like.

The nitrogen adsorption specific surface area ($N_2SA$) of carbon black is preferably not less than 25 $m^2/g$, more preferably not less than 30 $m^2/g$ since a sufficient reinforcing effect can be obtained. On the other hand, the $N_2SA$ of carbon black is preferably not more than 170 $m^2/g$, more preferably not more than 150 $m^2/g$, further preferably not more than 140 $m^2/g$, further preferably not more than 130 $m^2/g$, most preferably not more than 120 $m^2/g$ from the viewpoint of energy efficiency. The $N_2SA$ of carbon black as used herein is a value as measured in accordance with JIS K6217, method A.

When the rubber composition comprises carbon black, the content thereof based on 100 parts by mass of the rubber component is preferably 10 to 60 parts by mass, more preferably 15 to 55 parts by mass from the viewpoint of achievement of both excellent energy efficiency and durability.

Examples of the silica to be used include silica prepared by dry process (silicic anhydride), silica prepared by wet process (hydrous silicic acid) and the like. The silica prepared by wet process is preferable because it has more silanol groups on its surface and has many reaction points with a silane coupling agent.

The nitrogen adsorption specific surface area ($N_2SA$) of silica is preferably not less than 50 $m^2/g$, more preferably not less than 60 $m^2/g$, since a sufficient reinforcing effect of silica can be obtained. On the other hand, the $N_2SA$ of silica is preferably not more than 350 $m^2/g$, more preferably not more than 340 $m^2/g$, since dispersion of silica is satisfactory and energy efficiency is excellent. It is noted that the $N_2SA$ of silica as used herein is a value as measured with the BET method in accordance with ASTM D3037-81.

When the rubber composition comprises silica, the content thereof based on 100 parts by mass of the rubber component is preferably 2.5 to 35 parts by mass, more preferably 3.0 to 30 parts by mass from the viewpoint of achievement of both excellent energy efficiency and durability.

When the rubber composition comprises carbon black and silica, it is preferable that the content and the nitrogen adsorption specific surface area ($N_2SA$) of m (m is an integer of 1 or more) kinds of carbon black and n (n is an integer of 1 or more) kinds of silica satisfy the following general formulas (13) and (14):

$$\text{General formula (13): } 15 \le (X1+...+Xm) + (Z1+...+Zn) \le 70$$

$$\text{General formula (14): } 0.2 \le (X1/Y1+...+Xm/Ym) + (Z1/W1+...+Zn/Wn) \le 1.2,$$

wherein each of X1, ...Xm represents a content (part by mass) of each carbon black based on 100 parts by mass of a rubber component, each of Z1, ...Zn represents a content (part by mass) of each silica based on 100 parts by mass of a rubber component, each of Y1, ...Ym represents a nitrogen adsorption specific surface area ($m^2/g$) of each carbon black and each of W1, ...Wn represents a nitrogen adsorption specific surface area ($m^2/g$) of each silica.

The (X1+...+Xm) + (Z1+...+Zn) in the general formula (13) represents a total content (part by mass) of each of m kinds of carbon black and n kinds of silica based on 100 parts by mass of the rubber component. When the rubber composition comprises m kinds of carbon black and n kinds of silica, the total content thereof based on 100 parts by mass of the rubber component is preferably not less than 15 parts by mass, more preferably not less than 20 parts by mass, further preferably not less than 25 parts by mass. On the other hand, the total content of m kinds of carbon black and n kinds of silica is preferably not more than 70 parts by mass. By the total content of m kinds of carbon black and n kinds of silica being within the above range, that is, by the total content satisfying the general formula (13), both excellent rubber strength and energy efficiency can be achieved.

The (X1/Y1+...+Xm/Ym) + (Z1/W1+...+Zn/Wn) in the general formula (14) represents a sum of "content based on 100 parts by mass of the rubber component/$N_2SA$" of each of m kinds of carbon black and "content based on 100 parts by mass of the rubber component/$N_2SA$" of each of n kinds of silica. When the rubber composition comprises m kinds of carbon black and n kinds of silica, a value of the sum in the formula (14) is preferably not less than 0.20, more preferably not less than 0.25, further preferably not less than 0.30. On the other hand, the sum in the formula (14) is preferably not more than 1.2, more preferably not more than 1.1. By the sum of "content based on 100 parts by mass of the rubber component/ $N_2SA$" of m kinds of carbon black and n kinds of silica being within the above range, that is, by the sum satisfying the formula (14), energy efficiency and breaking resistance can be improved in a favorable balance.

Examples of the coupling agent include a silane coupling agent and the like and when the rubber composition comprises silica, it is preferable that a silane coupling agent is used together with silica. Any silane coupling agents conventionally used together with silica can be used, and examples thereof include: sulfide silane coupling agents such as bis(3-triethoxysilylpropyl)tetrasulfide, bis(2-triethoxysilylethyl)tetrasulfide,
bis(4-triethoxysilylbutyl)tetrasulfide,
bis(3-trimethoxysilylpropyl)tetrasulfide,
bis(2-trimethoxysilylethyl)tetrasulfide,
bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3-trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-triethoxysilylpropyl

methacrylate monosulfide and 3-trimethoxysilylpropyl methacrylate monosulfide; mercapto silane coupling agents such as 3-mercaptopropyltrimethoxysilane, 3-mercaptopropyltriethoxysilane, 2-mercaptoethyltrimethoxysilane, 2-mercaptoethyltriethoxysilane, and 3-octanoylthio-1-propyltriethoxysilane; vinyl silane coupling agents such as vinyltriethoxysilane and vinyltrimethoxysilane; amino silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy silane coupling agents such as γ-glycidoxypropyltriethoxysilane, γ-glycidoxypropyl trimethoxysilane, γ-glycidoxypropylmethyldiethoxysilane, and γ-glycidoxypropylmethyldimethoxysilane; nitro silane coupling agents such as 3-nitropropyltrimethoxysilane and 3-nitropropyltriethoxysilane, and chloro silane coupling agents such as 3-chloropropyltrimethoxysilane, 3-chloropropyltriethoxysilane, 2-chloroethyltrimethoxysilane, and 2-chloroethyltriethoxysilane. As to product names of these silane coupling agents, examples include Si69, Si266, Si363 (manufactured by Evonik Degussa GmbH) and NXT, NXT-LV, NXTULV, NXT-Z (manufactured by Momentive Performance Materials INC.) and the like. These coupling agents may be used alone, or may be used in combination with two or more thereof.

When the rubber composition comprises a silane coupling agent, the content thereof based on 100 parts by mass of silica is preferably not less than 0.5 part by mass, more preferably not less than 1.5 parts by mass, further preferably not less than 2.5 parts by mass, since the silica can be dispersed well. On the other hand, the content of the silane coupling agent is preferably not more than 20 parts by mass, more preferably not more than 15 parts by mass, further preferably not more than 10 parts by mass, since a dispersing effect of silica that is compatible with an increase of the cost can be obtained and a scorch time does not become too short and processability in a kneading process and an extruding process is satisfactory.

Examples of the semi-reinforcing filler include bituminous coal powder, talc, mica, hard clay, calcium carbonate and the like and these may be used alone, or may be used in combination with two or more thereof. Since these semi-reinforcing fillers do not form polymer gel in a kneading process, satisfactory sheet processability can be obtained by the rubber composition comprising these semi-reinforcing fillers. Among these, from the viewpoint of sheet processability and cost, bituminous coal powder, talc and hard clay are preferable and from the viewpoint of relatively small influence on performance other than the above, calcium carbonate is preferable.

The average particle diameter of talc is preferably not more than 50 μm, more preferably not more than 30μm from the viewpoint of energy efficiency. The lower limit of the average particle diameter of talc is not limited particularly, but preferably is not less than 1 μm.

The average particle diameter of mica is preferably not more than 50 μm, more preferably not more than 30μm from the viewpoint of energy efficiency. The lower limit of the average particle diameter of mica is not limited particularly, but preferably is not less than 1 μm.

The average particle diameter of hard clay is preferably not more than 50 μm, more preferably not more than 30μm from the viewpoint of energy efficiency. The lower limit of the average particle diameter of hard clay is not limited particularly, but preferably is not less than 1 μm.

The average particle diameter of calcium carbonate is preferably not more than 300 nm, more preferably not more than 100 nm from the viewpoint of energy efficiency and degree of influence on other performance. The lower limit of the average particle diameter of calcium carbonate is not limited particularly, but preferably is not less than 30 nm.

It is noted that the average particle diameter of the semi-reinforcing filler as used herein is an average particle diameter on a mass basis as determined from a particle size distribution as measured in accordance with JIS Z 8815-1994.

When the rubber composition comprises the semi-reinforcing filler, the content thereof (if used in combination, the total content) based on 100 parts by mass of the rubber component is preferably not less than 3 parts by mass, more preferably not less than 8 parts by mass from the viewpoint of sheet processability. On the other hand, the content of the semi-reinforcing fillers is preferably not more than 45 parts by mass, more preferably not more than 40 parts by mass since sufficient elongation at break can be obtained.

Oil, a liquid polymer, a liquid resin, plant-derived oil, an ester plasticizer and the like may be used as a plasticizer and among these, oil is preferable from the viewpoint of a favorable balance among processability, energy efficiency and cost. Ones generally used in the tire industry such as aroma oil, naphthene oil, paraffin oil and the like can be used as oil. Examples of the ester plasticizer include dibutyl adipate (DBA), diisobutyl adipate (DIBA), dioctyl adipate (DOA), di(2-ethyl hexyl) azelate (DOZ), dibutyl sebacate (DBS), diisononyl adipate (DINA), dietyl phthalate (DEP), dioctyl phthalate (DOP), diundecyl phthalate (DUP), dibutyl phthalate (DBP), bis(2-ethyl hexyl)sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP) and the like.

When the rubber composition comprises a plasticizer, the content thereof based on 100 parts by mass of the rubber component is preferably not less than 1 parts by mass, more preferably not less than 3 parts by mass from the viewpoint of achievement of both excellent energy efficiency and processability. On the other hand, the content of the plasticizer is preferably not more than 40 parts by mass, more preferably not more than 35 parts by mass, since a decrease of the rubber strength is prevented.

Examples of the antistatic agent include polyethylene glycol ester, a compound having an oxyethylene unit

such as polyoxyethylene alkyl ether, ionic liquid and the like and from the viewpoint of an antistatic effect and durability of the rubber composition, ionic liquid is preferable.

Examples of ionic liquid include ones represented by the following chemical formulas (I) to (IV).

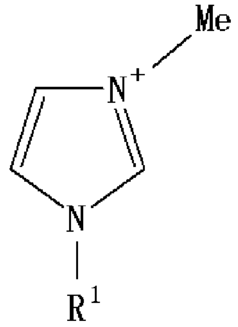

$X^-$ ···(I)

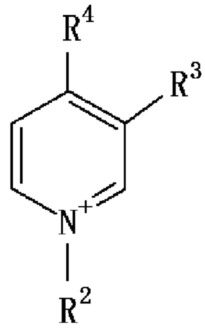

$X^-$ ···(II)

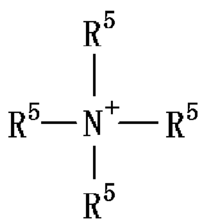

$X^-$ ···(III)

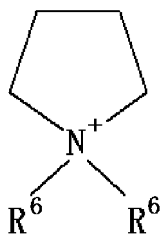

$X^-$ ···(IV)

wherein each of $R^1$, $R^2$, $R^5$ and $R^6$ is independently an alkyl group having 1 to 8 carbon atoms; each of $R^3$ and $R^4$ is independently an alkyl group having 1 to 8 hydrogen or carbon atoms; and X is independently Br, Cl, $NO_3$, $PF_6$, $BF_4$, tosyl, $CF_3SO_3$, $(CF_3SO_2)_2N$, $(C_2F_5SO_2)_2N$, $CH_3O(C_2H_4O)_2SO_3$, $CH_3OSO_3$ or $C_8H_{17}SO_3$.

The ionic liquid represented by the chemical formula (I) is imidazolium-based ionic liquid; the ionic liquid represented by the chemical formula (II) is pyridinium-based ionic liquid; the ionic liquid represented by the chemical formula (III) is ammonium-based ionic liquid; and the ionic liquid represented by the chemical formula (IV) is pyrrolidinium-based ionic liquid.

In the chemical formulas (I) to (IV), each of $R^1$, $R^2$, $R^5$ and $R^6$ is independently an alkyl group having 1 to 8 carbon atoms; each of $R^3$ and $R^4$ is independently an alkyl group having 1 to 8 hydrogen or carbon atoms; and X is independently Br, Cl, $NO_3$, $PF_6$, $BF_4$, tosyl, $CF_3SO_3$, $(CF_3SO_2)_2N$, $(C_2F_5SO_2)_2N$, $CH_3O(C_2H_4O)_2SO_3$, $CH_3OSO_3$ or $C_8H_{17}SO_3$.

Examples of the alkyl group having 1 to 8 carbon atoms include a methyl group, an ethyl group, a propyl group, a butyl group, a hexyl group, an octyl group and the like.

<Imidazolium-based ionic liquid>

Here, in the ionic liquid represented by the chemical formula (I), the ionic liquid in which the combination of {$R^1$/X} is any of {methyl/ $CH_3SO_4$}, {ethyl/Br, Cl, $NO_3$, $PF_6$, $BF_4$, tosyl, $CF_3SO_3$, $(CF_3SO_2)_2N$, $(C_2F_5SO_2)_2N$}, {butyl/Br, Cl, $PF_6$, $BF_4$, $(CF_3SO_2)_2N$, $CH_3O(C_2H_4O)_2SO_3$, $CH_3OSO_3$, $C_8H_{17}SO_3$}, {hexyl/Cl, $PF_6$, $BF_4$} or {octyl/Cl, $BF_4$} is particularly preferable.

<Pyridinium-based ionic liquid>

Also, in the ionic liquid represented by the chemical formula (II), the ionic liquid in which the combination of {$R^2$/$R^3$/$R^4$/X} is any of {ethyl/methyl/H/$(CF_3SO_2)_2N$}, {propyl or butyl/methyl/H/$(CF_3SO_2)_2N$} or {butyl/H/methyl/Br, Cl, $PF_6$ or $BF_4$} is particularly preferable.

<Ammonium-based ionic liquid>

Further, in the ionic liquid represented by the chemical formula (III), the ionic liquid in which three of $R^5$ is a methyl group ($CH_3$), one of $R^5$ is a propyl group ($C_3H_8$) and X is $(CF_3SO_2)_2N$ is particularly preferable.

In the rubber composition for tire according to the first invention, by using at least one of ionic liquids represented by the chemical formulas (I) to (IV) as the antistatic agent, an antistatic effect can be obtained more efficiently. Among the ionic liquids represented by the chemical formulas (I) to (IV), the ionic liquid in which $R^1$ to $R^6$ and X are suitably combined as the above is further excellent in an antistatic effect.

When the rubber composition comprises an antistatic agent, the content thereof based on 100 parts by mass of the rubber component is preferably not less than 5 parts by mass, more preferably not less than 10 parts by mass from the viewpoint of an antistatic effect and processability. On the other hand, the content of the antistatic agent is preferably not more than 35 parts by mass, more preferably not more than 30 parts by mass for preventing deterioration of steering stability due to a decrease of the stiffness of rubber.

Examples of the vulcanization accelerator include benzothiazols, benzothiazolyl sulfenamides, benzothiazolyl sulfenimides and the like. Among these, benzothiazolyl sulfenamides are preferable since they are suitable for NR and BR, fast in vulcanization and relatively reasonable, and N-cyclohexyl-2-benzothiazolyl sulfenamide is more preferable. Also, the benzothiazolyl sulfenamides and other vulcanization accelerators may be used in combination as the vulcanization accelerator.

When the rubber composition comprises a vulcanization accelerator, the content thereof based on 100 parts by mass of the rubber component is preferably not less than 0.5 part by mass, more preferably not less than 1.0 part by mass, further preferably not less than 1.5 parts by mass since a vulcanization speed becomes appropriate and vulcanization can be sufficiently performed. On the other hand, the content of the vulcanization accelerator is preferably not more than 4.0 parts by mass, more preferably not more than 3.0 parts by mass since the vulcanization speed becomes appropriate and scorching is hardly arisen.

The production method of the rubber composition for tire according to the second invention is not limited particularly and can be prepared by a commonly used method. For example, each of the above components are kneaded with a rubber kneading machine such as an open roll, a Bunbury mixer, a sealed kneader and the like, and subsequently the kneaded product is vulcanized, whereby the rubber composition for tire can be prepared.

The rubber composition for tire according to the second invention can be used for various components of tire such as a tread, a carcass, a sidewall, a clinch, a bead and the like and among these, it is preferable that the rubber composition is used for clinch.

The tire of the second invention can be produced by a commonly used method using the rubber composition for tire of the second invention. That is, a predetermined rubber composition is extruded into the shape of a component of tire in unvulcanzied state, formed in a tire building machine with other components of the tire to form an unvulcanized tire. This unvulcanized tire is then heat-pressurized in a vulcanizer to obtain the tire of the second invention.

The tire of the present invention can be suitably used for tires for passenger vehicles, tires for busses and trucks, tires for motorcycles, tires for racing and the like, and is particularly suitably used as tires for passenger vehicles.

EXAMPLE

Hereinafter, the present invention will be described in more detail based on Examples, but the present invention is not limited thereto only.

A variety of chemicals used in Production examples as described below will be described. The chemicals were purified in accordance with a usual method as necessary.

Natural rubber latex: field latex available from Taitex.co.,LTD.
Surfactant: Emal-E manufactured by Kao Corporation
Sodium hydroxide: NaOH manufactured by Wako Pure Chemical Industries, Ltd
Formic acid: formic acid manufactured by KANTO CHEMICAL CO., INC.

<Production example of HPNR1>

The solids content (DRC) of natural rubber latex was adjusted to 30% (w/v). Subsequently, 10 g of a surfactant and 20 g of sodium hydroxide were added to 1000 g of the natural rubber latex, and saponification reaction was carried out for 48 hours at room temperature to obtain a saponified natural rubber latex. Water was added to the latex to dilute to a DRC of 15% (w/v). Then, while the latex was slowly stirred, formic acid was added thereto to adjust the pH to 4.0 to 4.5, so that the latex was coagulated. The coagulated rubber was broken and repeatedly washed with 1000 mL of water. Then, the resulting rubber was dried for 2 hours at 110°C to obtain a solid rubber (HPNR1).

<Production example of HPNR2>

The solids content (DRC) of natural rubber latex was adjusted to 30% (w/v). Subsequently, water was added to the latex to dilute to a DRC of 15% (w/v). Then, while the latex was slowly stirred, formic acid was added thereto to adjust the pH to 4.0 to 4.5, so that the latex was coagulated. The coagulated rubber was broken and repeatedly washed with 1000 mL of water. Then, the resulting rubber was dried for 2 hours at 110°C to obtain a solid rubber (HPNR2).
Then, a variety of chemicals used in Examples and Comparative examples will be described.

NR: TSR20
NPNR1: high purity natural rubber (nitrogen content: 0.06% by mass) manufactured in the above Production example of HPNR1
HPNR2: high purity natural rubber (not saponified, nitrogen content: 0.2% by mass) manufactured in the above Production example of HPNR2
BR1: UBEPOL BR150B (cis content: 97% by mass) manufactured by Ube Industries, Ltd.
BR2: BR1250H (polymerized by use of lithium as an initializer, vinyl content: 10 to 13% by mass, Mw/Mn: 1.5, content of tin atom: 250 ppm, cis content: 35% by mass, tin terminal-modified BR) manufactured by ZEON CORPORATION
Carbon black 1: DIABLACK I (ISAF, N220, $N_2SA$: 114 $m^2/g$) manufactured by Mitsubishi Chemical Corporation
Carbon black 2: DIABLACK E (FEF, N550, $N_2SA$: 41 $m^2/g$) manufactured by Mitsubishi Chemical Corporation
Carbon black 3: SEAST NH ($N_2SA$: 74 $m^2/g$) manufactured by Tokai Carbon Co., Ltd.
Carbon black 4: DIABLACK N339 ($N_2SA$: 96 $m^2/g$) manufactured by Mitsubishi Chemical Corporation
Silica 1 Ultrasil VN3 ($N_2SA$: 175 $m^2/g$) manufactured by Evonik Degussa GmbH
Silica 2: Silica Z115GR ($N_2SA$: 112 $m^2/g$) manufactured by Rhodia Inc. Silane coupling agent 1: NXT (mercapto silane coupling agent) manufactured by Momentive Performance Materials INC.
Silane coupling agent 2: Si266 (bis(3-triethoxysilylpropyl)disulfide) manufactured by Evonik Degussa GmBH
Calcium carbonate: HAKUENKA CC (average particle diameter: 50 nm, BET: 26 $m^2/g$) manufactured by Shiraishi Kogyo Kaisha, Ltd.
Oil: X-140 (aroma oil) manufactured by Japan Energy Corporation
Antistatic agent 1: N,N,N-trimethyl-N-propyl ammonium bis(trifluoromethanesulfonyl)imide (in the chemical formula (III), $R^5$: three thereof are a methyl group ($CH_3$), one thereof is a propyl group ($C_3H_8$), X: bis(trifluoromethanesulfonyl)imide ($(CF_3SO_2)_2N$))
Antistatic agent 2: 1-ethyl-3-methyl pyridinium bis(trifluoromethylsulfonyl)imide (in the chemical formula (II), $R^2$: ethyl group ($C_2H_5$), $R^3$: methyl group ($CH_3$), $R^4$: hydroxide group, X: bis(trifluoromethylsulfonyl)imide ($(CF_3SO_2)_2N$))
Wax: SUNNOC N manufactured by OUCHI SHINKO CHEMICAL INDUSTRIAL CO., LTD.
Anti-aging agent: Antigen 3C (N-isopropyl-N'-phenyl-p-phenylenediamine) manufactured by Sumitomo Chemical Co. LTD.
Stearic acid: stearic acid "Tsubaki" manufactured by NOF Corporation Zinc oxide: ZINC FLOWER No.1 manufactured by Mitsui Mining & Smelting Co., Ltd.
Sulfur: Sulfur powder manufactured by TSURUMI CHEMICAL INDUSTRY CO., LTD.
Vulcanization accelerator: SOXINOL CZ (N-cyclohexyl-2-benzothiazolylsulfenamide) manufactured by Sumitomo Chemical Co. LTD.

Examples 1 to 6 and Comparative examples 1 to 3

According to formulations shown in Table 1, all of the chemicals other than sulfur and a vulcanization accelerator were kneaded for five minutes with a 1.7L Banbury mixer at the compound temperature at the time of discharge from mixer of 150°C to obtain a kneaded product. Then, sulfur and the vulcanization accelerator were added to the obtained kneaded product with an open roll and the mixture was kneaded for three minutes to obtain an unvulcanized rubber composition. The obtained unvulcanized rubber composition was press-vulcanized under a condition of 150°C for 30 minutes to obtain a vulcanized rubber sheet for test.

The obtained each unvulcanized rubber composition was formed into the shape of a sidewall, laminated with other components of the tire in a tire building machine and press-vulcanized for 30 minutes under a condition of 150°C to obtain tires for test (tire size: 195/65R15).

Examples 7 to 13 and Comparative examples 4 to 6

According to formulations shown in Table 1, all of the chemicals other than sulfur and vulcanization accelerators were kneaded for five minutes with a 1.7L Banbury mixer at the compound temperature at the time of discharge from mixer of 150°C to obtain a kneaded product. Then, sulfur and the vulcanization accelerators were added to the obtained kneaded product with an open roll and the mixture was kneaded for three minutes to obtain an unvulcanized rubber composition. The obtained unvulcanized rubber composition was press-vulcanized under a condition of 150°C for 30 minutes to obtain a vulcanized rubber sheet for test.

The obtained each unvulcanized rubber composition was formed into the shape of a clinch, laminated with other components of the tire in a tire building machine and press-vulcanized for 30 minutes under a condition of 150°C to obtain tires for test (tire size: 195/65R15).

Evaluation by methods described below was performed using the obtained vulcanized rubber sheets for test and the tires for test. The evaluation results are shown in Tables 1 and 2.

<Viscoelasticity test>

A dynamic elastic modulus E* and a loss tangent tanδ of each vulcanized rubber sheet for test were measured under a condition at a temperature of 70°C, a frequency of 10 Hz, an initial strain of 10 %, and a dynamic strain of 2 % using a viscoelastic spectrometer VES manufactured by Iwamoto Seisakusho K.K. The value of E*/tanδ in the general formula (1) or (8) was calculated from the obtained value.

<Tensile test>

According to JIS K6251 "vulcanized rubber and thermoplastic rubber - calculation of tensile characteristics", a tensile test was conducted using a No.3 dumbbell type test piece comprising each of the vulcanized rubber sheets for test, and an elongation at break EB and a tensile strength at break TB of each of the vulcanized rubber sheets for test were measured. The value of TB×EB in the general formula (5) or (12) was calculated from the obtained value.

<Measurement of rubber hardness HS>

According to JIS K6253, a rubber hardness Hs of each vulcanized rubber sheet for test at a temperature of 23°C was measured with a durometer type A.

<Steering stability test>

Each of the test tires was loaded on a domestically produced FF vehicle of 2000 cc on the whole wheel, followed by a test running on a test course. The steering stability under meandering immediately after the start of the test and after 30 minutes from the start of the test was evaluated by a sensorial evaluation of a driver. The evaluation was comprehensively and relatively evaluated, regarding the steering stability of Comparative example 1 or Comparative example 4 as 100. The higher the score is, the more excellent the steering stability is.

<Tire durability test>

Each of the test tires were assembled to a JIS standard rim of 15 × 6JJ, followed by running on a drum having a diameter of 1707 mm at room temperature (38°C) at a speed of 80 km/h, under conditions of an air pressure of 150 kPa and a load of 6.96 kN. In the case where damage such as a crack of the sidewall is arisen, the running was stopped.

A distance at which the damage was arisen was measured and durability of the tires was evaluated by the following evaluation basis. The targeted level of performance is at least ○. ○: The damage was not arisen in the side wall even if the tire was run for 30,000 km or more.

△: The damage was arisen in the side wall at the running distance of 10,000 km to less than 30,000 km.
×: The damage was arisen in the side wall at the running distance of less than 10,000 km.

<Index of energy efficiency >

Rolling resistance of each test tire when each tire was run under conditions of a rim (15 × 6JJ), an inner pressure (230 kPa), a load (3.43 kN) and a speed (80 km/h) was measured with a rolling resistance testing machine and results are shown by index, regarding the result of Comparative example 1 or Comparative example 4 as 100. The larger the index of energy efficiency is, the more excellent the energy efficiency is.

TABLE 1

| Sidewall | Example | | | | | | Com. Ex. | | |
|---|---|---|---|---|---|---|---|---|---|
| | 1 | 2 | 3 | 4 | 5 | 6 | 1 | 2 | 3 |
| Compounding amount (part by mass) | | | | | | | | | |
| NR | 30 | 20 | - | 30 | 30 | - | 45 | 45 | 45 |
| HPNR1 | 15 | 25 | 45 | 15 | 15 | - | - | - | - |
| HPNR2 | - | - | - | - | - | 45 | - | - | - |
| BR1 | 35 | 25 | - | 35 | 35 | - | 55 | 45 | 55 |
| BR2 | 20 | 30 | 55 | 20 | 20 | 55 | - | 10 | - |
| Carbon black 1 | 10 | 5 | - | 5 | 10 | - | - | - | - |
| Carbon black 2 | 20 | 25 | 30 | 15 | 20 | 30 | 50 | 40 | 9 |
| Silica 1 | - | - | - | 10 | - | - | - | - | - |
| Silane coupling agent 1 | - | - | - | 1 | - | - | - | - | - |
| Calcium carbonate | - | - | - | - | 5 | - | - | - | - |
| Oil | 6 | 8 | 10 | 6 | 6 | - | 12 | 12 | 12 |
| Antistatic agent | - | - | - | - | - | 10 | - | - | - |
| Wax | 1 | 1 | 1 | 1 | 1 | 1 | 1 | 1 | 1 |
| Anti-aging agent | 2.5 | 2.5 | 2.5 | 2.5 | 2.5 | 2.5 | 2.5 | 2.5 | 2.5 |
| Stearic acid | 2 | 2 | 2 | 2 | 2 | 2 | 2 | 2 | 2 |
| Zinc oxide | 3.5 | 3.5 | 3.5 | 3.5 | 3.5 | 3.5 | 3.5 | 3.5 | 3.5 |
| Sulfur | 2.5 | 2.5 | 2.5 | 2.5 | 2.5 | 2.5 | 2.5 | 2.5 | 2.5 |
| Vulcanization accelerator | 1 | 1 | 1 | 1 | 1 | 1 | 1 | 1 | 1 |
| Evaluation result | | | | | | | | | |
| tanδ (general formula (3)) | 0.07 | 0.06 | 0.05 | 0.07 | 0.08 | 0.06 | 0.16 | 0.14 | 0.03 |
| E* (MPa) (general formula (2)) | 5.8 | 5.3 | 4.5 | 5.9 | 5.6 | 4.8 | 3.0 | 2.8 | 1.8 |
| TB (MPa) | 24.0 | 23.0 | 20.0 | 24.5 | 23.0 | 22.0 | 17.0 | 15.0 | 8.6 |
| EB (%) (general formula (4)) | 520 | 550 | 600 | 520 | 500 | 530 | 570 | 580 | 700 |
| General formula (1) | 82.9 | 88.3 | 90.0 | 84.3 | 70.0 | 80.0 | 18.9 | 20.0 | 60.0 |
| General formula (5) | 12480 | 12650 | 12000 | 12740 | 11500 | 11660 | 9690 | 8700 | 6000 |
| General formula (6) | 30 | 30 | 30 | 30 | 35 | 30 | 55 | 40 | 9 |
| General formula (7) | 0.58 | 0.65 | 0.73 | 0.47 | 0.77 | 0.73 | 1.30 | 0.98 | 0.22 |
| Rubber hardness (Hs) | 58 | 57 | 56 | 58 | 58 | 57 | 55 | 50 | 40 |
| Steering stability | 118 | 115 | 110 | 119 | 115 | 115 | 100 | 90 | 77 |
| Tire durability | ○ | ○ | ○ | ○ | ○ | ○ | ○ | ○ | × |
| Energy efficiency | 111 | 113 | 115 | 111 | 109 | 113 | 100 | 103 | 116 |

TABLE 2

| Clinch | Example | | | | | | | Com. Ex. | | |
|---|---|---|---|---|---|---|---|---|---|---|
| | 7 | 8 | 9 | 10 | 11 | 12 | 13 | 4 | 5 | 6 |
| Compounding amount (part by mass) | | | | | | | | | | |
| NR | 5 | - | - | 5 | 5 | 5 | - | 35 | 30 | 30 |
| HPNR1 | 25 | 30 | 30 | 25 | 25 | 25 | - | - | - | - |
| HPNR2 | - | - | - | - | - | - | 30 | - | - | - |
| BR1 | 50 | 40 | - | 50 | 50 | 50 | - | 65 | 70 | 70 |
| BR2 | 20 | 30 | 70 | 20 | 20 | 20 | 70 | - | - | - |
| Carbon black 3 | 30 | 40 | 40 | 10 | 25 | 30 | 40 | 70 | 60 | 13 |
| Carbon black 4 | 10 | - | - | 30 | 15 | 10 | - | - | - | - |
| Silica 1 | 10 | 10 | 10 | - | 5 | 10 | 10 | - | - | - |
| Silica 2 | - | - | - | 10 | 5 | - | - | - | - | - |
| Silane coupling agent 2 | 1 | 1 | 1 | 1 | 1 | 1 | 1 | - | - | - |
| Calcium carbonate | - | - | - | - | - | 5 | - | - | - | - |
| Oil | - | 2 | 3 | - | - | - | - | 15 | 5 | - |
| Antistatic agent 2 | - | - | - | - | - | - | 10 | - | - | - |
| Wax | 1 | 1 | 1 | 1 | 1 | 1 | 1 | 1 | 1 | 1 |
| Anti-aging agent | 2.5 | 2.5 | 2.5 | 2.5 | 2.5 | 2.5 | 2.5 | 2.5 | 2.5 | 2.5 |
| Stearic acid | 2 | 2 | 2 | 2 | 2 | 2 | 2 | 2 | 2 | 2 |
| Zinc oxide | 2.5 | 2.5 | 2.5 | 2.5 | 2.5 | 2.5 | 2.5 | 2.5 | 2.5 | 2.5 |
| Sulfur | 2.75 | 2.75 | 2.75 | 2.75 | 2.75 | 2.75 | 2.75 | 2.75 | 2.75 | 2.75 |
| Vulcanization accelerator | 2.5 | 2.5 | 2.5 | 2.5 | 2.5 | 2.5 | 2.5 | 2.5 | 2.5 | 2.5 |
| Evaluation result | | | | | | | | | | |
| tanδ (general formula (10)) | 0.08 | 0.07 | 0.06 | 0.08 | 0.08 | 0.09 | 0.06 | 0.12 | 0.10 | 0.04 |
| E* (MPa) (general formula (9)) | 9.3 | 9.2 | 9.1 | 9.3 | 9.2 | 9.1 | 9.0 | 9.2 | 8.8 | 2.8 |
| TB (MPa) | 21.2 | 21.0 | 21.0 | 21.4 | 21.1 | 20.5 | 20.7 | 22.0 | 20.0 | 12.3 |
| EB (%) (general formula (11)) | 340 | 330 | 320 | 335 | 340 | 325 | 300 | 250 | 270 | 400 |
| General formula (8) | 116.3 | 131.4 | 151.7 | 116.3 | 115.0 | 101.1 | 150.0 | 76.7 | 88.0 | 70.0 |
| General formula (12) | 7220 | 6930 | 6720 | 7169 | 7174 | 6663 | 6200 | 5500 | 5400 | 4900 |
| General formula (13) | 50 | 50 | 50 | 50 | 50 | 55 | 50 | 70 | 60 | 13 |
| General formula (14) | 0.57 | 0.60 | 0.60 | 0.54 | 0.57 | 0.76 | 0.61 | 0.95 | 0.81 | 0.18 |
| Rubber hardness (Hs) | 67 | 67 | 67 | 67 | 67 | 66 | 67 | 66 | 65 | 45 |
| Steering stability | 107 | 106 | 105 | 107 | 106 | 105 | 105 | 100 | 98 | 84 |
| Tire durability | ○ | ○ | ○ | ○ | ○ | ○ | ○ | ○ | ○ | × |
| Energy efficiency | 104 | 108 | 112 | 104 | 104 | 103 | 112 | 100 | 102 | 118 |

From the results of Tables 1 and 2, it can be seen that a tire having a tire component composed of a rubber composition which comprises a rubber component and additives, wherein a dynamic elastic modulus E* (MPa) and a loss tangent tanδ measured at a temperature of 70°C, an initial strain of 10% and a dynamic strain of 2% satisfy predetermined formulas, and a tensile strength at break TB (MPa) and an elongation at break EB (%) as measured in accordance with JIS K6251 satisfy predetermined formulas, is excellent in steering stability and energy efficiency while maintaining strength.

## Claims

1. A tire having a tire component composed of a rubber composition for tire comprising a rubber component and additives,

wherein a dynamic elastic modulus E* (MPa) and a loss tangent tanδ measured at a temperature of 70°C, an initial strain of 10% and a dynamic strain of 2% satisfy the following general formulas (1) to (3), and
a tensile strength at break TB (MPa) and an elongation at break EB (%) as measured in accordance with JIS K6251 satisfy the following general formulas (4) and (5):

$$\text{General formula (1): } E^*/\tan\delta \geq 33.3$$

$$\text{General formula (2): } 3.0 \leq E^* \leq 8.0$$

$$\text{General formula (3): } \tan\delta \leq 0.090$$

$$\text{General formula (4): } EB \geq 500$$

$$\text{General formula (5): } TB \times EB \geq 9{,}000$$

**2.** The tire of claim 1, wherein the rubber composition has a rubber hardness Hs at 23°C as measured in accordance with the JIS-K6253 type A method of not more than 65.

**3.** The tire of claim 1 or 2, wherein the additives comprise carbon black.

**4.** The tire of claim 1 or 2, wherein the additives comprise n (n is an integer of 2 or more) kinds of carbon black and a content and nitrogen adsorption specific surface area of the carbon black satisfy the following general formulas (6) and (7):

$$\text{General formula (6): } 10 \leq X1+X2+\ldots+Xn \leq 45$$

$$\text{General formula (7): } 0.2 \leq X1/Y1+X2/Y2+\ldots+Xn/Yn \leq 1.0,$$

wherein each of X1, X2, ...Xn represents a content (part by mass) of each carbon black based on 100 parts by mass of a rubber component and each of Y1, Y2, ...Yn represents a nitrogen adsorption specific surface area ($m^2/g$) of each carbon black.

**5.** A tire having a tire component composed of a rubber composition for tire comprising a rubber component and additives,
wherein a dynamic elastic modulus E* (MPa) and a loss tangent tanδ measured at a temperature of 70°C, an initial strain of 10% and a dynamic strain of 2% satisfy the following general formulas (8) to (10), and
a tensile strength at break TB (MPa) and an elongation at break EB (%) as measured in accordance with JIS K6251 satisfy the following general formulas (11) and (12):

$$\text{General formula (8): } E^*/\tan\delta \geq 66.6$$

$$\text{General formula (9): } 6.0 \leq E^* \leq 12.0$$

$$\text{General formula (10): } \tan\delta \leq 0.090$$

$$\text{General formula (11): } EB \geq 300$$

$$\text{General formula (12): } TB \times EB \geq 6{,}000$$

**6.** The tire of claim 5, wherein the rubber composition has a rubber hardness Hs at 23°C as measured in accordance with the JIS-K6253 type A method of not more than 75.

**7.** The tire of claim 5 or 6, wherein the additives comprise carbon black and silica.

**8.** The tire of claim 5 or 6, wherein the additives comprise m (m is an integer of 1 or more) kinds of carbon black and n (n is an integer of 1 or more) kinds of silica and
a content and nitrogen adsorption specific surface area of the carbon black and silica satisfy the following general formulas (13) and (14):

$$\text{General formula (13): } 15 \leq (X1+\ldots+Xm) + (Z1+\ldots+Zn) \leq 70$$

$$\text{General formula (14): } 0.2 \leq (X1/Y1+\ldots+Xm/Ym) + (Z1/W1+\ldots+Zn/Wn) \leq 1.2,$$

wherein each of X1, ...Xm represents a content (part by mass) of each carbon black and each of Z1, ...Zn represents a content (part by mass) of each silica based on 100 parts by mass of a rubber component; and each of Y1, ...Ym represents a nitrogen adsorption specific surface area ($m^2/g$) of each carbon black and each of W1, ...Wn represents a nitrogen adsorption specific surface area ($m^2/g$) of each silica.

**Patentansprüche**

**1.** Reifen mit einer Reifenkomponente, welche aus einer Kautschukzusammensetzung für Reifen zusammengesetzt ist, welche eine Kautschukkomponente und Additive enthält,
wobei das dynamische Elastizitätsmodul E* (MPa) und der bei einer Temperatur von 70°C gemessene Verlusttangens tanδ, die anfängliche Belastung von 10% und die dynamische Belastung von 2% die nachfolgenden allgemeinen Formeln (1) bis (3) erfüllen und
die Reißfestigkeit TB (MPa) und die Bruchdehnung EB (%) gemessen gemäß der JIS K6251 die nachfolgenden allgemeinen Formeln (4) und (5) erfüllen:

$$\text{Allgemeine Formel (1): } E^*/\tan\delta \geq 33{,}3,$$

$$\text{Allgemeine Formel (2): } 3{,}0 \leq E^* \leq 8{,}0,$$

$$\text{Allgemeine Formel (3): } \tan\delta \leq 0{,}090,$$

$$\text{Allgemeine Formel (4): } EB \geq 500,$$

$$\text{Allgemeine Formel (5): } TBXEB \geq 9.000.$$

**2.** Reifen nach Anspruch 1, wobei die Kautschukzusammensetzung eine Kautschukhärts Hs bei 23°C gemessen gemäß dem JIS-K6253-Typ A-Verfahren von nicht mehr als 65 aufweist.

**3.** Reifen nach Anspruch 1 oder 2, wobei die Additive Ruß enthalten.

4. Reifen nach Anspruch 1 oder 2, wobei die Additive n (n ist eine ganze Zahl von 2 oder mehr) Arten von Ruß enthalten und
die Menge und die durch Stickstoffadsorption gemessene spezifische Oberfläche des Rußes die folgenden allgemeinen Formeln (6) und (7) erfüllen:

$$\text{Allgemeine Formel (6): } 10 \leq X1+X2+\ldots+Xn \leq 45$$

$$\text{Allgemeine Formel (7): } 0{,}2 \leq X1/Y1+X2/Y2+\ldots+Xn/Yn \leq 1{,}0,$$

wobei jedes von X1, X2, ...Xn die Menge (Massenteile) von jedem Ruß bezogen auf 100 Massenteile der Kautschukkomponente bedeuten und jedes von Y1, Y2, ...Yn die durch Stickstoffadsorption gemessene Oberfläche ($m^2/g$) von jedem Ruß bedeuten.

5. Reifen mit einer Reifenkomponente zusammengesetzt aus einer Kautschukzusammensetzung für einen Reifen enthaltend eine Kautschukkomponente und Additive,
wobei das dynamische Elastizitätsmodul E* (MPa) und der Verlusttangens tanδ gemessen bei einer Temperatur von 70°C, die initiale Belastung von 10% und die dynamische Belastung von 2% die nachfolgenden allgemeinen Formeln (8) bis (10) erfüllen und
die Reißfestigkeit TB (MPa) und die Bruchdehnung EB (%) gemessen gemäß der JIS K6251 die nachfolgenden allgemeinen Formeln (11) und (12) erfüllen:

$$\text{Allgemeine Formel (8): } E^*/\tan\delta \geq 66{,}6,$$

$$\text{Allgemeine Formel (9): } 6{,}0 \leq E^* \leq 12{,}0,$$

$$\text{Allgemeine Formel (10): } \tan\delta \leq 0{,}090,$$

$$\text{Allgemeine Formel (11): } EB \geq 300,$$

$$\text{Allgemeine Formel (12): } TBxEB \geq 6.000,$$

6. Reifen nach Anspruch 5, wobei die Kautschukzusammensetzung eine Kautschukhärte Hs bei 23°C gemessen gemäß dem JIS-K6253-Typ A-Verfahren von nicht mehr als 75 aufweist.

7. Reifen nach Anspruch 5 oder 6, wobei die Additive Ruß und Silica enthalten.

8. Reifen nach Anspruch 5 oder 6, wobei die Additive m (m ist eine ganze Zahl von 1 oder mehr) Arten von Ruß und n (n ist eine ganze Zahl von 1 oder mehr) Arten von Silica enthalten und
die Menge und die durch Stickstoffadsorption gemessene spezifische Oberfläche des Rußes und Silicas die nachfolgenden allgemeinen Formeln (13) und (14) erfüllen:

$$\text{Allgemeine Formel (13): } 15 \leq (X1+\ldots+Xm) + (Z1+\ldots Zn) \leq 70,$$

$$\text{Allgemeine Formel (14): } 0{,}2 \leq (X1/Y1+\ldots+Xm/Ym) + (Z1/W1+\ldots+Zn/Wn) \leq 1{,}2,$$

wobei jedes von X1, ...Xm die Menge (Massenteile) von jedem Ruß bedeuten und jedes von Z1, ...Zn die Menge (Massenteile) von jedem Silica bezogen auf 100 Massenteile der Kautschukkomponente bedeuten und jedes von Y1, ...Ym die durch Stickstoffadsorption gemessene spezifische Oberfläche ($m^2/g$) von jedem Ruß und jedes von

W1, ...Wn die durch Stickstoffadsorption gemessene spezifische Oberfläche ($m^2/g$) von jedem Silica bedeuten.

**Revendications**

1. Pneu présentant un constituant de pneu composé d'une composition de caoutchouc pour pneu comprenant un constituant de caoutchouc et des additifs,
dans lequel un module élastique dynamique E* (MPa) et une tangente de perte tanδ mesurés à une température de 70°C, une contrainte initiale de 10 % et une contrainte dynamique de 2 % satisfont les formules générales (1) à (3) suivantes, et
une résistance à la traction à rupture TB (MPa) et un allongement à rupture EB (%) comme mesurés selon JIS K6251 satisfont les formules générales (4) et (5) suivantes :

$$\text{Formule générale (1) : } E^*/\tan\delta \geq 33{,}3$$

$$\text{Formule générale (2) : } 3{,}0 \leq E^* \leq 8{,}0$$

$$\text{Formule générale (3) : } \tan\delta \leq 0{,}090$$

$$\text{Formule générale (4) : } EB \geq 500$$

$$\text{Formule générale (5) : } TBxEB \geq 9\ 000$$

2. Pneu selon la revendication 1, dans lequel la composition de caoutchouc présente une dureté de caoutchouc Hs à 23°C comme mesurée selon la méthode JIS-K6253 type A d'au plus 65.

3. Pneu selon la revendication 1 ou 2, dans lequel les additifs comprennent du noir de carbone.

4. Pneu selon la revendication 1 ou 2, dans lequel les additifs comprennent n (n est un nombre entier de 2 ou supérieur) types de noir de carbone et
une teneur et une surface spécifique d'adsorption d'azote du noir de carbone satisfont les formules générales (6) et (7) suivantes :

$$\text{Formule générale (6) : } 10 \leq X1+X2+\ldots+Xn \leq 45$$

$$\text{Formule générale (7) : } 0{,}2 \leq X1/Y1+X2/Y2+\ldots+Xn/Yn \leq 1{,}0,$$

dans lesquelles chacun de X1, X2, ...Xn représente une teneur (partie en masse) de chaque noir de carbone sur la base de 100 parties en masse d'un constituant de caoutchouc et chacun de Y1, Y2, ...Yn représente une surface spécifique d'adsorption d'azote ($m^2/g$) de chaque noir de carbone.

5. Pneu présentant un constituant de pneu composé d'une composition de caoutchouc pour pneu comprenant un constituant de caoutchouc et des additifs,
dans lequel un module élastique dynamique E* (MPa) et une tangente de perte tanδ mesurés à une température de 70°C, une contrainte initiale de 10 % et une contrainte dynamique de 2 % satisfont les formules générales (8) à (10) suivantes, et
une résistance à la traction à rupture TB (MPa) et un allongement à rupture EB (%) comme mesurés selon JIS K6251 satisfont les formules générales (11) et (12) suivantes :

$$\text{Formule générale (8) : } E^*/\tan\delta \geq 66{,}6$$

$$\text{Formule générale (9) : } 6{,}0 \leq E^* \leq 12{,}0$$

$$\text{Formule générale (10) : } \tan\delta \leq 0{,}090$$

$$\text{Formule générale (11) : } EB \geq 300$$

$$\text{Formule générale (12) : } TB \times EB \geq 6\ 000$$

**6.** Pneu selon la revendication 5, dans lequel la composition de caoutchouc présente une dureté de caoutchouc Hs à 23°C comme mesurée selon la méthode JIS-K6253 type A d'au plus 75.

**7.** Pneu selon la revendication 5 ou 6, dans lequel les additifs comprennent du noir de carbone et de la silice.

**8.** Pneu selon la revendication 5 ou 6, dans lequel les additifs comprennent m (m est un nombre entier de 1 ou supérieur) types de noir de carbone et n (n est un nombre entier de 1 ou supérieur) types de silice et
une teneur et une surface spécifique d'adsorption d'azote du noir de carbone et de la silice satisfont les formules générales (13) et (14) suivantes :

$$\text{Formule générale (13) : } 15 \leq (X1+\ldots+Xm) + (Z1+\ldots+Zn) \leq 70$$

$$\text{Formule générale (14) : } 0{,}2 \leq (X1/Y1+\ldots+Xm/Ym) + (Z1/W1+\ldots+ Zn/Wn) \leq 1{,}2,$$

dans lesquelles chacun de X1, ...Xm représente une teneur (partie en masse) de chaque noir de carbone et chacun de Z1, ...Zn représente une teneur (partie en masse) de chaque silice sur la base de 100 parties en masse d'un constituant de caoutchouc ; et
chacun de Y1, ...Ym représente une surface spécifique d'adsorption d'azote ($m^2/g$) de chaque noir de carbone et chacun de W1, ...Wn représente une surface spécifique d'adsorption d'azote ($m^2/g$) de chaque silice.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008101127 A
- JP 2009007454 A